**Europäisches Patentamt**

**European Patent Office**

**Office européen des brevets**

(19)

(11) Veröffentlichungsnummer: **0 015 467**
**B1**

(12) # EUROPÄISCHE PATENTSCHRIFT

(45) Veröffentlichungstag der Patentschrift:
05.05.82

(51) Int. Cl.³: **C 08 F 6/16, C 08 F 279/02**

(21) Anmeldenummer: **80100908.5**

(22) Anmeldetag: **25.02.80**

(54) **Verfahren zum Entfernen von Restmonomeren aus ABS-Polymerisaten.**

(30) Priorität: **10.03.79 DE 2909518**

(43) Veröffentlichungstag der Anmeldung:
**17.09.80 Patentblatt 80/19**

(45) Bekanntmachung des Hinweises auf die Patenterteilung:
**05.05.82 Patentblatt 82/18**

(84) Benannte Vertragsstaaten:
**BE DE FR GB IT NL**

(56) Entgegenhaltungen:
**EP 80 100 908**
**FR-A- 2 040 506**
**US-A- 4 115 447**
**Chemical Abstracts, Band 87, Nr. 18,**
**18. Oktober 1977, Zusammenfassung 136 829 f,**
**Seite 34, Spalte 1,**
**Columbus, Ohio (US)**

(73) Patentinhaber: **BAYER AG, Zentralbereich Patente, Marken und Lizenzen, D-5090 Leverkusen 1, Bayerwerk (DE)**

(72) Erfinder: **Humme, Gert, Dr., Ackerstrasse 17, D-5068 Odenthal-Glöbusch (DE)**
Erfinder: **Plato, Horst, Dr., Heymannstrasse 40, D-5090 Leverkusen 1 (DE)**
Erfinder: **Ott, Karl-Heinz, Dr., Paul-Klee-Strasse 54, D-5090 Leverkusen (DE)**
Erfinder: **Kowitz, Friedrich, Dr., Friedrich-Ebert-Strasse 44, D-4047 Dormagen (DE)**
Erfinder: **Hagenberg, Peter, Dipl.-Ing., Humperdinckstrasse 44, D-5090 Leverkusen (DE)**

Verfahren zum Entfernen von Restmonomeren aus ABS-Polymerisaten

ABS-Polymerisate sind im wesentlichen elastisch-thermoplastische Produkte, die sich hauptsächlich aus den Monomeren Acrylnitril (A), Butadien (B; auch durch andere Kautschuke substituiert) und Styrol bzw. α-Methylstyrol (S) aufbauen (vergl. auch C.H. Basdekis, ABS-Plastics, Reinhold Publishing Corporation, New York 1964).

In keinem der technisch praktizierten ABS-Herstellungsverfahren werden die Monomeren vollständig umgesetzt. Die Menge nicht umgesetzter Monomerer hängt ab vom Polymerisationsverfahren und den Polymerisationsbedingungen. Die nicht umgesetzten Monomeren (Restmonomeren) müssen aus dem Polymerisat entfernt werden. Die hierfür erforderlichen Massnahmen richten sich ebenfalls nach dem Polymersationsverfahren (beispielsweise Emulsions-, Suspensions-, Massepolymerisation) und nach dem geforderten Restmonomerengehalt.

Die Erfindung betrifft das Entfernen von Restmonomeren aus ABS-Polymerisaten, die durch Emulsionspolymerisation mit einem Monomerenumsatz über 92% hergestellt worden sind. Diese ABS-Polymerisate fallen also primär als Emulsionen oder Latices an.

Nicht umgesetzte Monomere können aus Lösungen bzw. wässrigen Emulsionen durch Wasserdampfdestillation entfernt werden. Dazu wird Dampf in die Lösung bzw. Emulsion eingeleitet oder – wenn genügend Wasser enthalten ist – die Lösung oder Emulsion erhitzt. Es destilliert dann ein Gemisch aus Wasser und den Restmonomeren ab. Wenn eine Emulsion vorliegt, werden auf diese Weise die Monomeren nur aus der kontinuierlichen Wasserphase abgetrennt. Überwiegend im Polymerisat enthaltene Restmonomere müssen daher erst in das Wasser eindiffundieren. Dies geschieht umso schneller, je kleiner die Polymerteilchen sind und je höher die Temperatur ist. Dann ist die Diffusionsgeschwindigkeit der Monomeren vom Polymerisat in das Wasser für die Wirksamkeit der Wasserdampfdestillation bestimmend.

Man hat also bisher, um Restmonomere zu entfernen, den Latex zunächst einer Wasserdampfdestillation unterworfen, d.h., ihn erhitzt, und anschliessend koaguliert. Nun ist es erfahrungsgemäss recht schwierig, einen Latex, also ein instabiles System zu erhitzen, ohne dass Koagulation eintritt. Ganz vermeiden lässt sich die Koagulation überhaupt nicht; man muss in jedem Fall aus dem durch Erhitzen entgasten Latex ausgefallene Teile abtrennen. Dies ist notwendig, weil man bei der nachfolgenden Koagulation möglichst gleichmässige Teilchen braucht, die beim Erhitzen zerstörten Anteile des Latex aber grosse Agglomerate darstellen. Man kann auch im allgemeinen nicht in der gleichen Vorrichtung, in der man erhitzt hat, anschliessend koagulieren, weil die Voraussetzungen und Bedingungen zum Durchmischen eines Latex, d.h., einer niedrigviskosen Flüssigkeit, und des Fällungsproduktes, d.h., eines Breies, völlig verschieden sind.

Gegenstand der Erfindung ist ein Verfahren zum Entfernen von Restmonomeren aus durch Emulsionspolymerisation hergestellten ABS-Polymerisaten, die Polymeren Gemische aus einem oder mehreren Pfropfpolymerisaten und einem oder mehreren thermoplastischen Harzen darstellen, das dadurch gekennzeichnet ist, dass man einem entsprechenden Latexgemisch 0,1 bis 10 Gew.-%, bezogen auf Feststoffe im Latex, eines Elektrolyten zusetzt und anschliessend das Gemisch unter Entfernen von Restmonomeren und einem Teil des Wassers die Destillation auf eine Temperatur von 55 bis 120 °C erhitzt. Die beiden Schritte, Zusatz des Elektrolyten und Erhitzen, sind an sich bekannt. Es ist erfindungswesentlich, den Elektrolyt mindestens gleichzeitig mit dem Erhitzen (der Wirkung nach eine Wasserdampfdestillation) zuzufügen, damit der Latex erst unter Teilchenvergrösserung koaguliert und dann Wasser und Restmonomere entzogen werden. Auf diese Weise werden die Restmonomeren wirksam entfernt, obwohl dies eigentlich nicht zu erwarten ist. Durch die Koagulation wird der Latex in eine Form überführt, in der die Teilchen vergrössert und nicht mehr gleichmässig und stabil im wässrigen Medium verteilt sind. Es sollten daher die Restmonomeren langsamer in das Wasser diffundieren und die Reinigungsoperation wirkungsloser werden. Erstaunlicherweise ist das Gegenteil der Fall. Von Vorteil bei dieser Art der Monomerenentfernung ist natürlich, dass man nach der Koagulation des Latex auf dessen Stabilität keine Rücksicht mehr nehmen muss, und dass auch die Neigung zum Schäumen vermindert wird.

Das Verfahren kann auf übliche und bekannte ABS-Emulsionspolymerisate angewendet werden. Solche Produkte sind meist ihrerseits Polymerengemische aus einem oder mehreren Pfropfpolymerisaten und einem oder mehreren thermoplastischen Harzen. Die Pfropfpolymerisate werden meist erhalten durch Polymerisation harzbildender Monomerer in Gegenwart eines Kautschuklatex, wobei sich bei der Polymerisation mindestens ein Teil der harzbildenden Monomeren mit dem Kautschuk chemisch verbindet. Dies wird als Pfropfen oder als Pfropfpolymerisation bezeichnet. Die thermoplastischen Harze werden im allgemeinen durch Polymerisation harzbildender Monomerer in wässriger Emulsion bei Abwesenheit des Kautschuklatex gewonnen. Mit ABS-Polymerisat bezeichnet man nun sowohl das Pfropfpolymerisat als auch eine Mischung mehrerer Pfropfpolymerisate als auch eine Mischung eines oder mehrerer Pfropfpolymerisate mit einem thermoplastischen Harz. Diese Mischungen erhält man entweder durch Mischen der Latices und gemeinsame Fällung und Aufarbeitung oder durch getrennte Fällung der Latices und Isolierung der Polymeren und anschliessende mechanische Mischung.

Im allgemeinen enthalten ABS-Polymerisate 2 bis 35 Gew.-% des als Pfropfbasis dienenden Kautschuks und sie bestehen aus 5 bis 70 Gew.-% eines oder mehrerer Pfropfpolymerisate und 95 bis 30 Gew.-% eines oder mehrerer thermoplastischer Harze.

Pfropfgrundlagen oder Pfropfbasen im Sinne der vorliegenden Erfindung sind Kautschuklatices, die eine Einfriertemperatur $T_g \leqq -10\,°C$ aufweisen (gemäss DIN 53 445) und die zur Pfropfung hinreichend reaktiv sind. Bevorzugt sind Kautschuke auf 1,3-Dienbasis und modifizierte Acrylatkautschuke. Besonders bevorzugt sind Chlorbutadien-Polymerisate, Butadien-Polymerisate, Isopren-Polymerisate (Homopolymerisate und Copolymerisate mit bis zu 30 Gew.-% Styrol und/oder Acrylnitril) und Copolymerisate aus Butadien und Acrylsäurealkylestern mit bis zu 70% Acrylsäureesteranteil. Die Teilchengrösse (gemeint ist der Teilchendurchmesser $d_{50}$, d.h., der mittlere Durchmesser, oberhalb dessen und unterhalb dessen jeweils 50% der Teilchendurchmesser liegen) ist bevorzugt 0,05 bis 0,8 µm.

Harzbildende Monomere sind insbesondere Styrol, α-Methylstyrol und Acrylnitril. Für besondere Effekte können sie ganz oder teilweise durch (Meth)Acrylnitril, Alkylester der Acrylsäure, Alkylester der Methacrylsäure oder durch Halogenderivate des Styrols und des α-Methylstyrols ersetzt werden. Bevorzugt verwendet man Styrol und Acrylnitril im Gewichtsverhältnis 5:1 bis 1:5, besonders bevorzugt 4:1 bis 3:2. Diese harzbildenden Monomeren werden nach den Regeln der radikalischen Polymerisation in Anwesenheit des Kautschuklatex in Emulsion polymerisiert. Es resultieren dann Pfropfpolymerisate. Diese Monomeren können auch ohne Anwesenheit des Kautschuks polymerisiert werden und ergeben dann die thermoplastischen Harze. Diese Harze haben Molekulargewichte von 30.000 bis 200.000.

Die ABS-Polymerisate fallen, wie bereits gesagt, zunächst als Latex an.

Diese Latices zu koagulieren, ist an sich bekannt. Man erreicht dies durch Zusatz von Elektrolyten.

Geeignete Koaguliermittel sind insbesondere in Wasser leicht lösliche Alkali- und Erdalkalisalze organischer und anorganischer Säuren, Aluminiumsulfat, wasserlösliche organische und anorganische Säuren, sowie Stoffe, die durch Hydrolyse eines der vorgenannten Fällmittel bilden. Besonders bevorzugt sind Natriumchlorid, Magnesiumchlorid, Magnesiumsulfat, Calciumchlorid, Aluminiumsulfat, Salzsäure, Schwefelsäure, Phosphorsäure, Ameisensäure, Essigsäure, Propionsäure, und deren Salze.

Das Koaguliermittel oder ein Gemisch aus verschiedenen Koaguliermitteln wird bevorzugt in Form wässriger Lösungen dem zu koagulierenden Latex zugesetzt. Die Menge muss zur Fällung ausreichen; sie ist im allgemeinen 10 bis 100% des Volumens des Latex. Die Fällmittelmenge bzw. Konzentration des Fällmittels kann im allgemeinen so gewählt werden, dass das zu fällende Polymer 7,5–35 Gew.-% der Gesamtmenge ausmacht.

Teilchengrösse und Teilchengrössenverteilung des Koagulats sind abhängig von den Fällbedingungen, d.h., von der Temperatur des zu koagulierenden Latex, der Temperatur des Fällmittels, und der Art des Vermischens. Im allgemeinen koaguliert man 0,5 bis 6, bevorzugt 1 bis 3 Stunden bei ca. 90–100 °C. Bei höherer Temperatur genügen kürzere Zeiten.

Das Koagulat wird danach in üblicher Weise erwärmt; die erforderliche Temperatur richtet sich nach dem Druck im System, d.h., man kann bei Normaldruck, Überdruck oder Unterdruck destillieren, Wärmezufuhr ist durch Heizen des Gefässes, aber auch durch Einblasen von Wasserdampf möglich.

Beispiele

Herstellung und Charakterisierung der ABS- und SAN-Emulsions-Polymerisate

1. Pfropfgrundlage (G)

Die Pfropfgrundlagen werden durch Emulsionspolymerisation in Druckreaktoren hergestellt. Die Polymerisationstemperatur variiert zwischen 55° und 75 °C (Start-Temperatur → Endtemperatur). Wasser, Butadien, n-Dodecylmerkaptan und Kaliumperoxidisulfat werden zu Beginn der Reaktion vorgelegt. Bei Einsatz von

|  | Pfropf-grundlage G-1 Gew.-Tle | Pfropf-grundlage G-2 Gew.-Tle |
|---|---|---|
| Entsalztes Wasser | 68 | 200 |
| Na-Salz der disproportionierten Abietinsäure | | |
| Gesamtmenge | 2,0 | 5,0 |
| zu Beginn der Polymerisation vorgelegt | 0,5 | 5,0 |
| in Anteilen im Laufe der Polymerisation nachdosiert | 1,5 | – |
| n/1 NaOH | 2,0 | 5,0 |
| Kaliumperoxidisulfat | 0,5 | 0,3 |
| Butadien | 100 | 100 |
| n-Dodecylmerkaptan | 0,4 | 0,4 |

wird die Polymerisation bis zu einem Umsatz von >95% geführt. Nicht umgesetztes Butadien wird durch Entgasung aus dem Latex entfernt.

In aufgearbeiteter Form besitzen die Polymerisate einen Gelgehalt von $\geqq 85\%$ (Messung in MEK oder Toluol). Die mit G-1 bezeichnete Pfropfgrundlage hat eine mittlere Teilchengrösse von 0,4 µm und die mit G-2 bezeichnete eine mittlere Teilchengrösse von 0,1 µm (Ultrazentrifugenmessung; vergl. W. Scholten, H. Lange: Kolloid, Z. und Z. Polymere 250 (1972) 782–796).

2. Pfropfpolymerisate (P)

Die unter 1 beschriebenen Pfropfgrundlagen-Latices werden mit entsalztem Wasser auf eine solche Polymerisat-Konzentration verdünnt, dass auf

g (vergl. Tabelle A) Gew.-Tle Pfropfgrundlage (Festprodukt)

175 Gew.-Teile Wasser entfallen.

Das zur Verdünnung des Latex verwendete Wasser enthält 0,5 Gew.-Teile (bezogen auf Pfropfgrundlage + Pfropfmonomere) Kaliumperoxidisulfat. Nach der Verdrängung der Luft durch Stickstoff und Erwärmen auf 65 °C werden in zwei getrennten Zuläufen

2 Gew.-Teile des Natriumsalzes der disproportionierten Abietinsäure, gelöst in 25 Gew.-Teilen entsalztem Wasser, und die im folgenden aufgeführten Mengen an Styrol und Acrylnitril zugesetzt. Die Zugabe-Zeit beträgt 4 Stunden, zur Vervollständigung der Reaktion wird nach beendetem Zulauf noch 2h bei 65 °C weitergerührt.

| | Pfropf-polymerisat P 1 | Pfropf-polymerisat P 2 |
|---|---|---|
| Pfropfgrundlage | G-1 | G-2 |
| Gew.-Tle Pfropfgrundlage (Feststoff) (g) | 80 | 50 |
| Gew.-Tle Styrol | 17,5 | 35 |
| Gew.-Tle Acrylnitril | 2,5 | 15 |

Tabelle A

### 3. SAN-Copolymerisat

Es wird ein α-Methylstyrol-Acrylnitril-Copolymerisat (SAN) gemäss dem U.S.-Patent 3 111 501, Beispiel 1, hergestellt:

| | |
|---|---|
| Gew.-Tle α-Methylstyrol: | 69 |
| Gew.-Tle Acrylnitril: | 31 |
| Gew.-Tle Dodecylmercaptan: | 0,25 |
| $M_\eta$: | 90 000 |

### 4. Latex-Mischung

Für die Restmonomerenentfernung wird eine Latex-Mischung

| | |
|---|---|
| 12 Gew.-Tle Pfropfpolymerisat | P 1 |
| 15 Gew.-Tle Pfropfpolymerisat | P 2 |
| 73 Gew.-Tle SAN-Copolymerisat | |

hergestellt. Die Latex-Mischung hat einen Feststoffgehalt von 33 Gew.-%.

### 5. Latex-Koagulation

Zur Latex-Koagulation werden 1,27 Gew.-Tle einer wässrigen 2%igen Magnesiumsulfatlösung vorgelegt und 1,0 Gew.-Tle des unter 4 hergestellten Latex (33%) Feststoffgehalt) unter intensivem Rühren zugesetzt. Bei Temperaturerhöhung auf über 80 °C wird das Koagulat in gut filtrierbarer Form erhalten.

Typische Teilchengrössenverteilung (nach Trocknen in einem Heissluft-Trockner):

90% > 20 µm,
50% > 100 µm,
10% > 500 µm.

### 6. Monomerbestimmung

Die Monomerbestimmung erfolgt durch Dampfraum-Gaschromatographie nach der Methode des internen Standards. Lösungsmittel: Dimethylformamid. Fehlerquelle: ±5 –10%.

### 7. Beispiele 1–4; Monomer-Entfernung aus Latex und Koagulat

Für die Beispiele 1–4 wird von dem unter 4 beschriebenen Latex ausgegangen. Der Latex wird in 4 gleiche Teile geteilt und wie folgt weiterbehandelt:

Beispiel 1: (Vergleich)
Der Latex wird bei Normaldruck 3 Stunden lang unter Rühren einer Destillation unterworfen.

| | |
|---|---|
| Siedetemperatur: | 99–100 °C |
| Destillationsgeschwindigkeit: | 2,1% des Reaktionsvolumens pro Stunde |

Beispiel 2: (Vergleich)
Der Latex wird bei einem vorgegebenen Druck von 523–525 Torr 3 Stunden lang unter Rühren einer Destillation unterworfen.

| | |
|---|---|
| Siedetemperatur: | 89–90 °C |
| Destillationsgeschwindigkeit: | 2,4% des Reaktionsvolumens pro Stunde |

Beispiel 3:
Die Latexprobe wird gem. 5 koaguliert und bei Normaldruck 3 Std. lang unter Rühren einer Destillation unterworfen.

| | |
|---|---|
| Siedetemperatur: | 100 °C |
| Destillationsgeschwindigkeit: | 3,3% des Reaktionsvolumens pro Stunde. |

Beispiel 4:
Die Latexprobe wird gemäss 5 koaguliert und bei 524–527 Torr 3 Std. lang unter Rühren einer Destillation unterworfen.

| | |
|---|---|
| Siedetemperatur: | 90 °C |
| Destillationsgeschwindigkeit: | 2,2% des Reaktionsvolumens pro Stunde. |

In jedem der Beispiele wurde das abdestillierte Flüssigkeitsvolumen (Wasser + Monomere) kontinuierlich durch Zusatz von Wasser ins Reaktionsvolumen ersetzt.

Nach 1,5 und 3 Std. Destillationsdauer wurden aus dem Reaktionsgefäss Proben entnommen und auf ihren Acrylnitril- und Styrolgehalt analysiert.

Um die Monomergehalte bei der Latex- und Koagulat-Behandlung zahlenmässig vergleichen zu können, wurde ein einheitliches Bezugssystem gewählt: Die gesamte, im Reaktionsvolumen vorhandene Monomermenge wird auf die Polymermenge im Reaktionsvolumen bezogen.

Aus analytischer Sicht ist ein Latex ein homogenes 1-Stoff-System, die wässrige Koagulat-Dispersion jedoch ein heterogenes 2-Stoff-System; d.h., für die Monomerbestimmung bei der Koagulat-Behandlung müssen die wässrige Phase und die abfiltrierbare Polymerphase getrennt analysiert werden. Die zu den Beispielen 1–4 ermittelten Analysendaten sind in den Tabellen 1 und 2 zusammengefasst.

In Tabelle 3 finden sich die für den Verfahrensvergleich Latex- ⟷ Koagulat-Behandlung relevanten Zahlen. Sie errechnen sich aus den Tabellen 1 und 2 wie folgt:

Latex:
Monomergehalt,
bezogen auf
Polymersubstanz

$$= \frac{\text{Monomergehalt im Latex}}{0,33}$$

Koagulat:
Monomergehalt,
bezogen auf
Polymersubstanz

$$= \begin{array}{c}\text{Monomergehalt}\\ \text{in der}\\ \text{Polymerphase}\end{array} + \frac{1,27 + 0,67}{0,33} \times \begin{array}{c}\text{Monomergehalt}\\ \text{i.d.}\\ \text{wässr.}\\ \text{Phase}\end{array}$$

$$\begin{array}{c}\text{Monomergehalt}\\ \text{in der}\\ \text{Polymerphase}\end{array} = \frac{\begin{array}{c}\text{Monomergehalt im}\\ \text{wasserfeucht. Polymer}\end{array} - \begin{array}{c}\text{Wassergehalt im}\\ \text{wasserfeucht. Polymer}\end{array} \times \begin{array}{c}\text{Monomergehalt i.d.}\\ \text{wässrigen Phase} \times 10^{-2}\end{array}}{1 - \begin{array}{c}\text{Wassergehalt im}\\ \text{wasserfeuchten Polymer} \times 10^{-2}\end{array}}$$

Tabelle 1
Analytische Untersuchungen an Latices

| | Nach ... h Destillation | Destillations-Temperatur °C | ACN-Gehalt (ppm) | Styrol-Gehalt (ppm) |
|---|---|---|---|---|
| Ausgangslatex | 0 | — | 3 000 | 1 100 |
| Beispiel 1 | 1,5 | 100 | 145 | 480 |
| Beispiel 1 | 3 | 100 | 30 | 170 |
| Beispiel 2 | 1,5 | 90 | 88 | 431 |
| Beispiel 2 | 3 | 90 | 17 | 233 |

Tabelle 2

Analytische Untersuchungen an Koagulaten

| | Nach ...h Destillation | Destillations-Temperatur °C | Acrylnitril-Gehalt im wasserfeuchten Polymer (ppm) | Acrylnitril-Gehalt in wässr. Phase (ppm) | Styrol-Gehalt im wasserfeuchten Polymer (ppm) | Styrol-Gehalt in wässr. Phase (ppm) | Wassergehalt im wasserfeuchten Polymer (%) |
|---|---|---|---|---|---|---|---|
| Beispiel 3 | 1,5 | 100 | 92 | 10 | 860 | 10 | 22 |
| Beispiel 3 | 3 | 100 | 56 | 6 | 550 | 12 | 23 |
| Beispiel 4 | 1,5 | 90 | 101 | 34 | 404 | 15 | 24 |
| Beispiel 4 | 3 | 90 | 20 | 18 | 265 | 15 | 21 |

Tabelle 3

Monomergehalt, bezogen auf Polymersubstanz

| | Destillationsdauer (h) | Temperatur (°C) | Latex bzw. Koagulat | Acrylnitril (ppm) | Styrol (ppm) |
|---|---|---|---|---|---|
| Ausgangslatex | 0 | | | 9 000 | 3 300 |
| Beispiel 1 | 1,5 | 100 | Latex | 435 | 1 440 |
| Beispiel 2 | 1,5 | 90 | Latex | 264 | 1 300 |
| Beispiel 3 | 1,5 | 100 | Koagulat | 173 | 1 160 |
| Beispiel 4 | 1,5 | 90 | Koagulat | 320 | 620 |
| Beispiel 1 | 3 | 100 | Latex | 90 | 510 |
| Beispiel 2 | 3 | 90 | Latex | 51 | 700 |
| Beispiel 3 | 3 | 100 | Koagulat | 106 | 780 |
| Beispiel 4 | 3 | 90 | Koagulat | 125 | 418 |

**Patentanspruch:**

Verfahren zum Entfernen von Restmonomeren aus durch Emulsionspolymerisation hergestellten ABS-Polymerisaten, die Polymeren-Gemische aus einem oder mehreren Pfropfpolymerisaten und einem oder mehreren thermoplastischen Harzen darstellen, dadurch gekennzeichnet, dass man einem entsprechenden Latexgemisch 0,1 bis 10 Gew.-%, bezogen auf Feststoffe im Latex, eines Elektrolyten zusetzt und anschliessend das Gemisch unter Entfernen von Restmonomeren und einem Teil des Wassers durch Destillation auf eine Temperatur von 55 bis 120 °C erhitzt.

**Revendications**

Procédé d'élimination de monomères résiduels à partir de polymères ABS préparés par polymérisation en émulsion, lesquels constituent des mélanges de polymères d'un ou plusieurs polymères greffés et d'une ou plusieurs résines thermoplastiques, caractérisé en ce qu'on ajoute, à un mélange de latex correspondant, 0,1 à 10% en poids, par rapport aux matières solides dans le latex, d'un électrolyte, et en ce qu'on chauffe ensuite le mélange à une température de 55 à 120 °C avec élimination des monomères résiduels et d'une partie de l'eau par distillation.

**Claim**

Process for the removal of residual monomers from ABS polymers which have been prepared by emulsion polymerisation and which are polymer mixtures of one or more graft polymers and one or more thermoplastic resins, characterised in that, to a corresponding latex mixture, 0,1 to 10% by weight, based on the solids content in the latex, of an electrolyte are added and the mixture is then heated to a temperature of 55 to 120 °C while the residual monomers and part of the water are removed by distillation.